# EUROPEAN PATENT SPECIFICATION

(11) **EP 1 190 836 B1**
(45) Date of publication and mention of the grant of the patent: **25.08.2004**
(21) Application number: 01203542.4
(22) Date of filing: 18.09.2001
(51) Int. Cl.: B29C 67/04, B29C 53/58, F16L 51/02

(54) **Method of manufacturing a lining of polytetraflouroethylene (PTFE) for an expansion joint or similar flexible couplings, a PTFE lining and a tool for use in connection therewith**
Verfahren zur Herstellung einer Beschichtung aus Polytetrafluoroethylen (PTFE) für eine ausdehnbare Dichtung oder vergleichbare, flexible Kupplungen, eine PTFE Beschichtung und damit im Zusammenhang stehendes Werkzeug
Procédé pour fabriquer un revêtement en polytetrafluoroéthylene (PTFE) pour un joint d'expansion ou des liaisons souples similaires, un revêtement en PTFE et un outil rapporté

(30) Priority: 19.09.2000 DK 200001388
(43) Date of publication of application: 27.03.2002
(73) Proprietor: KE-BURGMANN A/S, DK-6600 Vejen (DK)
(72) Inventor: Jacobsen, Finn Erik, 5500 Middelfart (DK)
(74) Representative: Elmeros, Claus

(56) References cited:
- EP-A- 0 524 893
- GB-A- 1 371 337
- US-A- 3 698 422
- US-A- 4 017 576

## Description

The present invention relates to a method of manufacturing an internal lining of polytetraflouroethylene (PTFE) for an elastomer expansion joint or similar flexible couplings, a PTFE lining manufactured hereby and a forming tool for use in connection with manufacturing.

Flexible couplings, such as elastomer expansion joints, are used in a pipe line system for absorption of movements due to thermal expansions or mechanical loads on the pipe line system.

In pipe line systems used in the chemical industry or power plants, the expansion joints are exposed to extremely aggressive mediums such as gas or fluids and are thus very exposed to corrosion. The form of and the movements in the flexible expansion joints combined with the pressure ranging from very low pressures to nominal pressures in excess of 25 bar make it quite difficult to treat the surface of the expansion joint with a durable protection.

From EP-A-0 524 893, a method of manufacturing a cylindrical lining of polytetraflouroethylene (PTFE) or teflon is known. This material is advantageous since it is chemically resistant. According to this method, a number of strips of PTFE are manufactured and wrapped around a rod or cylinder in successive layers. After that, the tubular piece of PTFE is sintered and subsequently pulled off the cylindrical form around which it is manufactured.

However, the internal geometry of a rubber expansion joint or a similar coupling is often non-cylindrical in shape. This means that a lining manufactured according to EP-A-0 524 893 must subsequently be mechanically deformed into a form which corresponds to the geometry of the internal opening in the expansion joint.

The disadvantages of this known manufacturing method are that the manufactured lining must be cylindrical which requires subsequent treatment processes in order to provide the lining with the appropriate form. This mechanical deformation of the PTFE material weakens the strength of the lining which may lead to a weakening of the lining in the expansion joint since there is a risk that the lining does not possess the necessary chemical barrier properties. In addition, this method of manufacturing provides a relatively inaccurate lining whereby the risk of the expansion joint not being sufficiently protected on the inside is increased.

A method of forming or coating articles by wrapping a thermoplastic material around them is known from British patent No. 1 371 337. The material, which may e.g. be PTFE, is wound around a core built by curved pieces placed around a central block. This form may be collapsed by removing the central block. However, this disclosure does not discuss the vital issue of how the forming blocks must be accurately fixed to the central block prior to the forming of a lining.

This method and form assembly also result in a rather inaccurate lining which increases the risk of the expansion joint not being sufficiently protected internally. This is because the form must be manufactured with sufficient tolerances for the central block to be pulled out in an axial direction. The problem increases proportionately with the size of the form due to the enormous amount of friction between the abutment surfaces of the blocks towards the central portion. During this manufacturing process, the heat treatment of the lining can only take place from "the outside" since the massive core, which the forming tool represents in this respect, prevents good heat transfer to the inside of the lining. In this manner, there is a risk of non-uniform heat treatment which causes the inaccurate tolerances of the finished product.

On this background, it is the object of the present invention to provide a method of manufacturing of a lining, which overcomes the disadvantages known from the prior art.

This object is achieved by a method according to claim 1, a lining according to claim 10 and a forming tool according to claim 13.

By a method according to the invention, it is possible to obtain a pre-manufactured, moulded and sintered lining in a predetermined design which fits a given connection piece, e.g. an elastomer expansion joint or a similar flexible coupling. Thus, the invention offers a manufacturing method of a lining for internal protection of an expansion joint, whereby the lining may be manufactured in any kind of rotary-symmetrical shape. The form removal after sintering takes place by taking the forming tool apart by collapsing it. Since the forming tool is provided with a self-locking shell, i.e. a hollow structure, a good heat conductivity is ensured to the inside of the lining during sintering whilst at the same time ensuring an accurate form which is both heat-resistant and by which a lining with precise dimensions may be obtained.

By a lining according to the invention, it is not necessary to carry out a mechanical deformation of the PTFE material which means that a manufacturing method according to the invention provides a more tough and stable lining with significantly improved chemical barrier properties.

In a preferred embodiment of the invention, at least on layer of glass fibre fabric is wrapped around the outer layer. In this manner, a fixation of the unsintered PTFE material during the sintering process is obtained. In a particularly preferred embodiment of the invention, at least the outer layer is wound with an elongated PTFE tape. In this way, the glass fibre fabric may be avoided since at least the outer layer is elongated and does thereby provide a tightening around the forming tool whereby the PTFE layers are fixed during the subsequent sintering process.

However, the glass fibre fabric may be advantageous anyway, potentially in combination with the elongated PTFE tape, in order to ensure uniform density in the lining, especially in relation to more complex geometrical shapes.

The manufactured lining is sintered, preferably at a temperature between 325 and 425°C, for a period of time ranging from 30 seconds to over 1 hour, depending on the nature and the heat-conducting properties of the form.

Subsequent to sintering and prior to the form removal, the lining may be provided with an adhesive and in a preferred embodiment of the invention, the outside of the lining may be provided with non-vulcanised rubber with contours corresponding to the desired final form of the elastomer expansion joint for a subsequent finishing moulding of the expansion joint.

The PTFE tape or tapes, which is/are wound around the form, is/are an unsintered tape which may be provided with additives such as PFA, TFM and/or variants hereof and having a width ranging between 5 and 300 mm depending on the size of the lining to be manufactured. Typically, small forming parts ranging from 100 to 500 mm will be wound with a tape with a width ranging between 15 to 30 mm.

The unsintered tape or tapes is/are preferably provided with a thickness of 0.05 to 0.5 mm.

The tapes are wound in a helical form around the forming tool. Another advantage of this invention is that the manufacturing method is not sensitive to large variations in the accuracy of the laying pattern. The lining may consist of two windings to the number of windings needed, preferably between 10 and 20 windings. The layers may advantageously be wound at an angle of 1° to 90° degrees in relation to each other and have a fairly uniform thickness. Hereby, a tough and stable lining with accurate, predetermined dimensions is ensured.

The forming tool used by a method according to the invention and which is suitable for manufacturing a lining according to the invention, comprises a number of forming elements assembled into an annular configuration and retained by assembly means, said forming elements each having an outer forming surface and two abutment surfaces for fixation, and the forming surfaces of the individual forming elements collectively forming a rotational-symmetrical forming surface which corresponds in shape and size to the desired internal geometry of an expansion joint making up a positive form for moulding around it, and the forming elements each being provided with an outer forming surface and two abutment surfaces for fixation, said forming elements assembling into a joint self-locking shell when assembled.

The abutment surfaces on the majority of the forming elements are provided in a radial plane, but at least one forming element is provided with two abutment surfaces, which are different from a radial plane, and this at least one locking forming element is provided with a wedge-shaped cross-section which is oriented in another radial direction than the other forming elements, i.e. pointing outwards. Hereby, a self-locking mechanism of the forming elements is achieved and a demountable form with an accurate moulding surface is ensured.

Moreover, a collapsible tool is achieved which can be taken apart and removed from the fully sintered lining irrespective of the kind of rotary-symmetric shape of the form, where it would otherwise be impossible to drag the lining off the form for the deforming of the lining.

The forming tool is preferably made of a heat-resistant material which possesses good heat-conducting properties, such as aluminium. Hereby, the sintering period for the PTFE lining may be significantly reduced.

In the following, the invention has been described in detail with reference to the accompanying drawings, in which
- fig. 1: shows a side view of a lining manufactured by a method according to the invention,
- fig. 2: shows a side view of an elastomer expansion joint with a lining manufactured by a method according to the invention,
- fig. 3: shows a cross-section of a forming tool according to the invention, and
- fig. 4: shows the manufacture of a lining according to the invention.

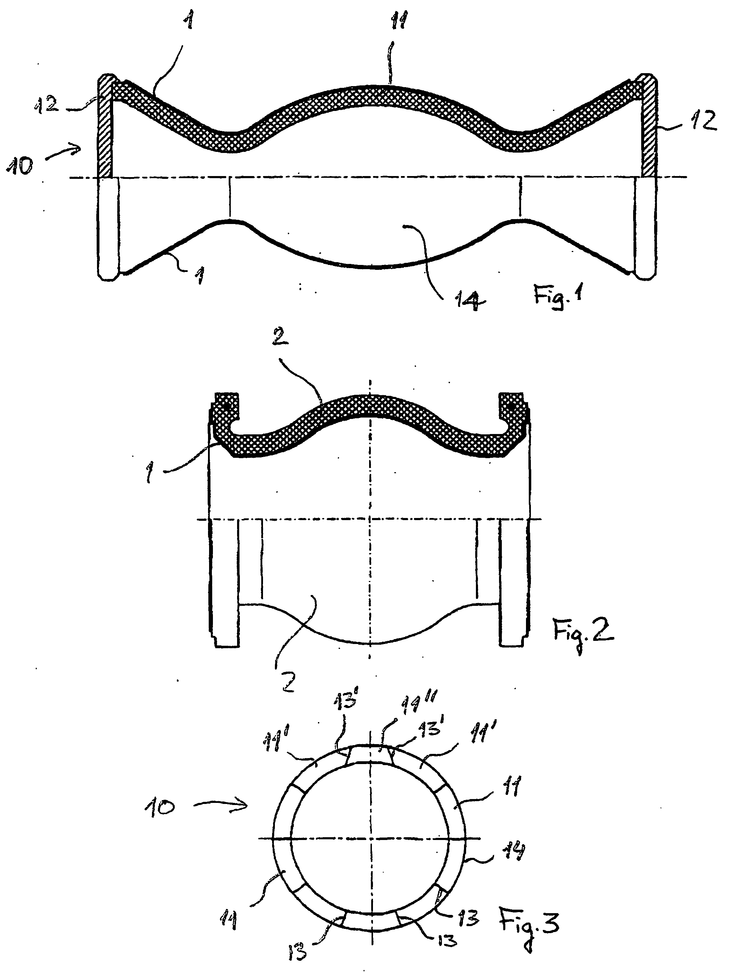

Figure 1 shows a side view of a forming tool 10 for manufacturing a curved, rotary-symmetric lining 1 with the upper part showing a section of the forming tool 10. As can be seen in the figure, the forming tool 10 comprises a number of forming elements 11 ,11', 11" which are assembled by assembly means 12 including end plates between which the forming elements 11, 11', 11" may be restrained.

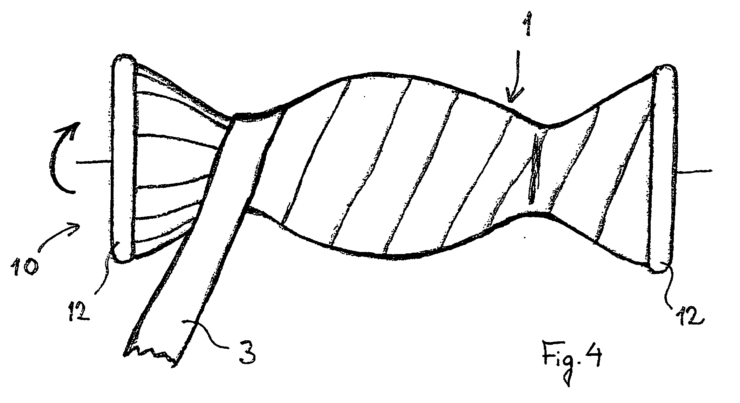

The forming elements 11 create a forming surface 14 around which a PTFE lining 1 is formed. The lining 1 is formed by winding one or more layers of unsintered PTFE tape 3 (see fig. 4) depending on the size of the form around the desired dimensions of the lining 1. The tapes 3 are wound in a helical configuration around the form. Typically, the lining 1 will include two to twenty windings corresponding to the most common forms. The lining 1 will preferably have at thickness of 0.05 to 0.5 mm. The PTFE tapes 3 have a width of 5 to 300 mm, preferably 15 to 30 mm.

After the tapes 3 are wound around the lining 1, the lining 1, whilst still on the form, is sintered at a temperature between 325° to 425° for a period of time ranging from 30 seconds to more than one hour depending on the dimensions of the lining and the heat-conducting properties of the form.

In order to retain the unsintered PTFE lining during the sintering process, it may be provided with an outer layer of glass fibre fabric. Alternatively, at least the outer PTFE layer may be provided with an elongated PTFE tape. Hereby, the elongated tape will retract around the form and thereby the other layers of PTFE tape 3.

After sintering, non-vulcanised rubber 2 is applied around the lining 1, e.g. while the lining 1 still remains on the forming tool 10, as shown in fig. 2. Hereafter, the form is removed from the lining 1 by collapsing the forming tool. The elastomer expansion joint, i.e. the lining with the applied rubber may then be placed in a rubber moulding form on an expanding silicone core or the like, wherein the layer of rubber 2 is vulcanised. Finally, the elastomer expansion joint may subsequently be processed at the end surfaces for the formation of special end geometries.

The forming elements 11 make up a hollow shell. The shell provides the forming surface and is hollow since the forming elements 11 make up a tubular form. The forming elements 11 are restrained at each end by a retention member, e.g. an end plate 12. Each forming element 11 is provided with two radially oriented abutment surfaces 13. In order to achieve the self-locking effect, one of the forming elements 11" is provided with a wedge-like shaped cross-section pointing outwards so that this locking forming element 11" may be mounted and dismounted on the annular shell from the inside and wedged into place between two neighbouring forming elements 11' which are shaped with an oppositely disposed radial abutment surface 13 and an adjacent, angled abutment surface 13", said adjacent abutment surface being adjacent and angled similarly to the corresponding abutment surface of the locking element 11", see fig. 3. Hereby, the forming elements 11 may be pushed into place in an annular configuration and accurately locked in this position forming a forming surface 14. The form 10 may be dismounted inside the finished lining 1. The forming elements 11 may be released from the restrained position by removing the retention member, i.e. the end plates of the assembly means 12, whereby the forming elements 11 are loose and no longer retained in their annular positions. Consequently, the form is allowed to collapse inside the lining and the form elements may be removed from the inside of the lining.

By the invention, it is realised that other variations and equivalents than those described are possible without departing from the scope of the invention as set forth by the accompanying claims.

## Claims

1. Method of manufacturing an internal lining of polytetraflouroethylene (PTFE) for an elastomer expansion joint or similar flexible coupling members, whereby one or more unsintered tapes of PTFE or a PTFE-based material is/are wound around a rotary-symmetrical, non-cylindrical, positive forming tool whereby the tapes form a lining comprising a number of PTFE layers in a shape which essentially corresponds to the desired internal shape of the coupling member, whereafter the lining is sintered and subsequently removed from the form by collapsing the self-locking shell of the forming tool by removing at least one retention member of the forming tool.

2. Method according to claim 1, whereby the outer layer is wrapped with at least one layer of glass fibre fabric.

3. Method according to claim 1 or 2, whereby at least the outer layer is wound with an elongated PTFE tape.

4. Method according to claims 1 to 3, whereby the lining is sintered at a temperature between 325 and 425° C for a period of time ranging from 30 seconds to over one hour.

5. Method according to any of the preceding claims, whereby the lining subsequent to the sintering process and prior to the form removal may be provided with an adhesive and whereby the lining is supplied with a non-vulcanised layer of rubber around the lining with a contour corresponding to the desired shape of the elastomer expansion joint for moulding thereof.

6. Method according to any of the preceding claims, whereby the PTFE tape or tapes is/are provided with a width ranging between 5 to 300 mm, preferably between 15 to 30 mm.

7. Method according to any of the preceding claims, whereby the PTFE tape or tapes is/are provided a thickness in the range of 0.05 to 0.5 mm.

8. Method according to any of the preceding claims, whereby the tapes are wound in a helical form around the forming tool.

9. Method according to any of the preceding claims, whereby the lining comprises at least two windings, preferably between 10 and 20 windings.

10. PTFE lining for an elastomer expansion joint or a similar flexible coupling manufactured according to a manufacturing method according any of the preceding claims, whereby the lining is provided with two or more layers of PTFE tape provided in a helical configuration and with a rotary-symmetric, non-cylindrical shape.

11. Lining according to claim 10, wherein the PTFE tape or tapes is/are provided with a width ranging between 5 to 300 mm, preferably between 15 to 30 mm.

12. Lining according to claim 11, wherein the PTFE tape or tapes is/are provided with a thickness ranging between 0.05 to 0.5 mm.

13. Forming tool for use in connection with a manufacturing method according to any of claims 1 to 9 comprising a number of forming elements mutually arranged in an annular configuration building a rotational-symmetric forming surface which corresponds in shape and size to a desired internal geometry of a expansion joint and thus constitutes a positive form for moulding around it, said forming elements being restrained by assembly means, **characterised in that** the forming element each is provided with an outer forming surface and two abutment surfaces for fixation, said forming elements being assembled for forming a self-locking, hollow shell.

14. Forming tool according to claim 13, wherein the abutment surfaces on a majority of forming elements are disposed in a radial plane.

15. Forming tool according to claim 14, wherein at least one forming element is provided with two abutment surfaces different from a radial plane and wherein this at least one locking form element is provided with a wedge-shaped cross-section oppositely directed from the majority of forming elements.

16. Forming tool according to claims 13 to 15, wherein the forming tool is made of a heat resistant material with high heat-conducting properties, such as aluminium.

## Patentansprüche

1. Verfahren zur Herstellung einer Innenauskleidung aus Polytetrafluorethylen (PTFE) für einen Elastomer-Dehnungsausgleicher oder ähnliche flexible Kupplungsanschlussteile, wobei ein oder mehr ungesinterte Bänder aus PTFE oder einem Material auf PTFE-Basis um ein rotationssymmetrisches, nicht zylindrisches Positiv-Formwerkzeug gewickelt wird/werden, wodurch die Bänder eine Auskleidung mit einer Anzahl von PTFE-Lagen bilden, deren Form im Wesentlichen der gewünschten Innenform des Anschlussteils entspricht, wonach die Auskleidung gesintert und anschließend aus der Form entfernt wird, indem die selbstsperrende Hülle des Formwerkzeugs durch Entfernen mindestens eines Arretierteils des Formwerkzeugs zusammenfallen gelassen wird.

2. Verfahren nach Anspruch 1, wobei die Außenlage mit mindestens einer Lage Glasfasergewebe umwickelt wird.

3. Verfahren nach Anspruch 1 oder 2, wobei zumindest die Außenlage mit einem gedehnten PTFE-Band umwickelt wird.

4. Verfahren nach den Ansprüchen 1 bis 3, wobei die Auskleidung für eine von 30 Sekunden bis über eine Stunde reichende Zeitdauer bei einer Temperatur zwischen 325 und 425°C gesintert wird.

5. Verfahren nach einem der vorstehenden Ansprüche, wobei die Auskleidung nach dem Sintervorgang und vor der Formentfernung mit einem Klebemittel versehen werden kann und wobei um die Auskleidung herum zur Ausformung dessen eine nicht vulkanisierte Kautschuklage mit einer der gewünschten Form des Elastomer-Dehnungsausgleichers entsprechenden Kontur vorgesehen wird.

6. Verfahren nach einem der vorstehenden Ansprüche, wobei das PTFE-Band oder die PTFE-Bänder eine Breite zwischen 5 bis 300 mm, vorzugsweise zwischen 15 bis 30 mm, hat/haben.

7. Verfahren nach einem der vorstehenden Ansprüche, wobei das PTFE-Band oder die PTFE-Bänder eine Dicke im Bereich 0,05 bis 0,5 mm hat/haben.

8. Verfahren nach einem der vorstehenden Ansprüche, wobei die Bänder spiralförmig um das Formwerkzeug gewickelt werden.

9. Verfahren nach einem der vorstehenden Ansprüche, wobei die Auskleidung mindestens zwei Wicklungen, vorzugsweise zwischen 10 und 20 Wicklungen, umfasst.

10. PTFE-Auskleidung für einen Elastomer-Dehnungsausgleicher oder ein ähnliches flexibles Anschlussstück, die entsprechend einem Herstellungsverfahren gemäß einem der vorstehenden Ansprüche hergestellt ist, wobei die Auskleidung mit zwei oder mehr Lagen PTFE-Band versehen ist, die in einer spiralförmigen Gestaltung und in einer rotationssymmetrischen, nicht zylindrischen Form vorgesehen sind.

11. Auskleidung nach Anspruch 10, bei der das PTFE-Band oder die PTFE-Bänder eine Breite zwischen 5 bis 300 mm, vorzugsweise zwischen 15 bis 30 mm, hat/haben.

12. Auskleidung nach Anspruch 11, bei der das PTFE-Band oder die PTFE-Bänder eine Dicke zwischen 0,05 bis 0,5 mm hat/haben.

13. Formwerkzeug zur Verwendung in Verbindung mit einem Herstellungsverfahren gemäß einem der Ansprüche 1 bis 9, das eine Anzahl gegenseitig in einer ringförmigen Gestaltung angeordneter Formelemente enthält, die eine rotationssymmetrische Formoberfläche aufbauen, die in Form und Größe einer gewünschten Innengeometrie eines Dehnungsausgleichers entspricht und somit eine positive Form zur um sie herum erfolgenden Ausformung bildet, wobei die Formelemente von Montagemitteln eingespannt sind, **dadurch gekennzeichnet, dass** die Formelemente jeweils mit einer äußeren Formoberfläche und zwei zur Fixierung dienenden Stirnflächen versehen sind und die Formelemente so zusammengebaut sind, dass sie eine selbstsperrende, hohle Hülle bilden.

14. Formwerkzeug nach Anspruch 13, bei dem die Stirnflächen auf einer Mehrheit der Formelemente in einer Radialebene angeordnet sind.

15. Formwerkzeug nach Anspruch 14, bei dem mindestens ein Formelement mit zwei von einer Radialebene verschiedenen Stirnflächen versehen ist und bei dem dieses mindestens eine sperrende Formelement mit einem keilförmigen Querschnitt versehen ist, der zur Mehrzahl der Formelemente gegengerichtet ist.

16. Formwerkzeug nach den Ansprüchen 13 bis 15, bei dem das Formwerkzeug aus einem hitzebeständigen Material mit hoher Wärmeleitfähigkeit wie etwa Aluminium besteht.

## Revendications

1. Procédé pour fabriquer un revêtement interne de polytétrafluoroéthylène (PTFE) pour un joint d'expansion élastomère ou des éléments de couplage souples similaires, tel que une ou plusieurs bandes non frittées de PTFE ou d'un matériau à base de PTFE est/sont enroulée(s) autour d'un outil de forme positif, à symétrie de révolution non cylindrique, tel que les bandes forment un revêtement comprenant un nombre de couches de PTFE d'une forme qui correspond essentiellement à la forme interne souhaitée de l'élément de couplage, après quoi le revêtement est fritté et par la suite retiré de la forme en rétractant la coque autobloquante de l'outil de forme en ôtant au moins un élément de rétention de l'outil de forme.

2. Procédé selon la revendication 1, tel que la couche extérieure est enveloppée dans au moins une couche de tissu en fibre de verre.

3. Procédé selon la revendication 1 ou 2, tel que la couche extérieure au moins est enroulée avec une bande de PTFE étiré.

4. Procédé selon les revendications 1 à 3, tel que le revêtement est fritté à une température entre 325 et 425°C pendant une durée de 30 secondes à plus d'une heure.

5. Procédé selon l'une quelconque des revendications précédentes, tel que le revêtement, à la suite du procédé de frittage et avant de retirer la forme, peut être pourvu d'un adhésif et tel que le revêtement est équipé d'une couche non-vulcanisée de caoutchouc autour du revêtement avec un contour correspondant à la forme souhaitée du joint d'expansion élastomère pour le moulage de celui-ci.

6. Procédé selon l'une quelconque des revendications précédentes, tel que la ou les bande(s) de PTFE est/sont fournie(s) avec une largeur entre 5 et 300 mm, de préférence entre 15 et 30 mm.

7. Procédé selon l'une quelconque des revendications précédentes, tel que la ou les bande(s) de PTFE est/sont fournie(s) avec une épaisseur de 0,05 à 0,5 mm.

8. Procédé selon l'une quelconque des revendications précédentes, tel que les bandes sont enroulées dans une forme hélicoïdale autour de l'outil de forme.

9. Procédé selon l'une quelconque des revendications précédentes, tel que le revêtement comprend au moins deux enroulements, de préférence entre 10 et 20 enroulements.

10. Revêtement de PTFE pour un joint d'expansion élastomère ou un élément de couplage souple similaire fabriqué selon un procédé de fabrication selon l'une quelconque des revendications précédentes, tel que le revêtement est pourvu de deux ou davantage couches de bande de PTFE en une configuration hélicoïdale et une forme à symétrie de révolution non cylindrique.

11. Revêtement selon la revendication 10, dans lequel la ou les bande(s) de PTFE est/sont fournie(s) avec une largeur entre 5 et 300 mm, de préférence entre 15 et 30 mm.

12. Revêtement selon la revendication 11, dans lequel la ou les bande(s) de PTFE est/sont fournie(s) avec une épaisseur entre 0,05 et 0,5 mm.

13. Outil de forme destiné à une utilisation en relation avec un procédé de fabrication selon l'une quelconque des revendications 1 à 9, comprenant un nombre d'éléments de forme mutuellement disposés en une configuration annulaire créant une surface de forme à symétrie de révolution qui correspond dans sa forme et sa taille à une géométrie interne souhaitée d'un joint d'expansion et qui constitue par conséquent une forme positive pour un moulage autour de celle-ci, lesdits éléments de forme étant liés par des moyens d'assemblage, **caractérisé en ce que** chacun des éléments de forme est fourni avec une surface de forme extérieure et deux surfaces d'appui pour fixation, lesdits éléments de forme étant assemblés pour former une coque creuse autobloquante.

14. Outil de forme selon la revendication 13, dans lequel les surfaces d'appui sur une majorité d'éléments de forme sont disposées dans un plan radial.

15. Outil de forme selon la revendication 14, dans lequel au moins un élément de forme est fourni avec deux surfaces d'appui autres qu'un plan radial, et dans lequel cet au moins un élément de forme bloquant est pourvu d'une section transversale en forme de coin dirigée à l'opposé de la majorité des éléments de forme.

16. Outil de forme selon les revendications 13 à 15, dans lequel l'outil de forme est fait d'un matériau thermorésistant possédant de hautes propriétés thermo-conductrices, tel que l'aluminium.
